(19) Europäisches Patentamt

European Patent Office

Office européen des brevets

(11) **EP 1 316 740 A2**

## (12) EUROPEAN PATENT APPLICATION

(43) Date of publication:
**04.06.2003 Bulletin 2003/23**

(51) Int Cl.⁷: **F16D 41/06**

(21) Application number: **02026182.2**

(22) Date of filing: **25.11.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **29.11.2001 JP 2001364634**

(71) Applicant: **Kabushiki Kaisha Toyota Jidoshokki
Kariya-shi, Aichi-ken (JP)**

(72) Inventor: **Hayashi, Hirohito
Kariya-shi, Aichi-ken (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **One way clutch assembly**

(57)     A one-way clutch assembly has a first ring (67), a second ring (68), a third ring (69), a first one-way clutch mechanism (711) and a second one-way clutch mechanism (712). The first (67), second (68) and third (69) rings have a substantially circular shape. The second and third rings (68,68) are coaxially located with respect to the first ring (67). The first one-way clutch mechanism (711) is located between the first ring (67) and the second ring (68) for selectively transmitting first power therebetween. The second one-way clutch (712) mechanism is located between the first ring (67) and the third ring (69) for selectively transmitting second power therebetween.

FIG. 4

**Description**

BACKGROUND OF THE INVENTION

The present invention relates to a one-way clutch assembly for a rotary shaft driven by two drive sources and more particularly to a one-way clutch assembly that includes two one-way clutch mechanisms for selectively transmitting power between a first drive source and a rotary shaft or between a second drive source and the rotary shaft.

Unexamined Japanese Patent Publication No. 11-30182 discloses a conventional compressor or a rotary machine for a vehicle. The compressor drives a compression mechanism. The compressor is selectively driven by an external drive source or an electric motor for compressing refrigerant.

In the above structure, the compressor includes a rotary shaft for driving the compression mechanism and a pulley for transmitting power from the external drive source to the rotary shaft. A first one-way clutch is placed in a power transmission path between the pulley and the rotary shaft. A second one-way clutch is placed in a power transmission path between the electric motor and the rotary shaft. The first one-way clutch and the second one-way clutch each selectively allow power transmission respectively between the rotary body and the rotary shaft and between the electric motor and the rotary shaft. For example, power from the external drive source drives the compression mechanism while the power does not drive the electric motor, that is, a rotor of the electric motor. As a result, the power from the external drive source to the rotary shaft need not to drive an extra component other than the compression mechanism. Namely, the power is not used for unnecessary operation.

An unwanted feature in the above structure is that the first and second one-way clutches are separate and are respectively placed between the pulley and the rotary shaft and between the electric motor and the rotary shaft. In other words, each of the one-way clutches needs to be separately assembled to the respective designated positions. In view of reducing a manufacturing process and the number of components, the above separate one-way clutches are undesirable. Therefore, it is desired that a rotary machine restricts energy loss by blocking the power from transmitting to the electric motor, while the external drive source drives the mechanism, and that the rotary machine also reduces costs by reducing a manufacturing process and the number of components.

SUMMARY OF THE INVENTION

In accordance with the present invention, a one-way clutch assembly has a first ring, a second ring, a third ring, a first one-way clutch mechanism and a second one-way clutch mechanism. The first, second and third rings have a substantially circular shape. The second and third rings are coaxially located with respect to the first ring. The first one-way clutch mechanism is located between the first ring and the second ring for selectively transmitting first power therebetween. The second one-way clutch mechanism is located between the first ring and the third ring for selectively transmitting second power therebetween.

In accordance with the present invention, a one-way power transmission clutch unit for a rotary machine that has a rotary shaft and first and second drive sources for driving the rotary machine has a first power transmission unit, a second power transmission unit, a third power transmission unit, a first one-way clutch mechanism and a second one-way clutch mechanism. The first power transmission unit is coupled to the rotary shaft. The second power transmission unit is coupled to the first drive source. The third power transmission unit is coupled to the second drive source. The first one-way clutch mechanism is located between the first and second power transmission units for selectively transmitting first power therebetween. The second one-way clutch mechanism is located between the first and third power transmission units for selectively transmitting second power therebetween.

Other aspects and advantages of the invention will become apparent from the following description, taken in conjunction with the accompanying drawings, illustrating by way of example the principles of the invention.

BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:

FIG. 1 is a schematic end view of an engine of a vehicle with auxiliary machines according a first preferred embodiment of the present invention;

FIG. 2 is a schematic cross-sectional view of a compressor and a refrigerant circuit according to the first preferred embodiment of the present invention;

FIG. 3 is a schematic cross-sectional view of a control valve in the compressor according to the first preferred embodiment of the present invention;

FIG. 4 is an enlarged schematic cross-sectional view of a power transmitting mechanism of the compressor according to the first preferred embodiment of the present invention;

FIG. 5A is a schematic perspective view of a one-way clutch assembly of the power transmitting mechanism according to the first preferred embodiment of the present invention;

FIG. 5B is a schematic cross-sectional view of the one-way clutch assembly that is taken along the line II-II in FIG. 5A;

FIG. 6A is an enlarged schematic cross-sectional view of a one-way clutch mechanism in a state when power transmits according to the first preferred embodiment of the present invention;

FIG. 6B is an enlarged schematic cross-sectional view of the one-way clutch mechanism in a state when power transmission is blocked according to the first preferred embodiment of the present invention;

FIG. 7 is an enlarged schematic cross-sectional view of a power transmitting mechanism of a compressor according to a second preferred embodiment of the present invention;

FIG. 8A is a schematic perspective view of a one-way clutch assembly according to alternative embodiments of the present invention;

FIG. 8B is a schematic cross-sectional view of the one-way clutch assembly that is taken along the line III-III in FIG. 8A;

FIG. 9A is a schematic perspective view of a one-way clutch assembly according to an alternative embodiment of the present invention;

FIG. 9B is a schematic cross-sectional view of the one-way clutch assembly that is taken along the line IV-IV in FIG. 9A;

FIG. 10A is a schematic perspective view of a one-way clutch assembly according to an alternative embodiment of the present invention; and

FIG. 10B is a schematic cross-sectional view of the one-way clutch assembly that is taken along the line IV-IV in FIG. 10A.

DETAILED DESCRIPTION OF THE PREFERRED EMBODIMENTS

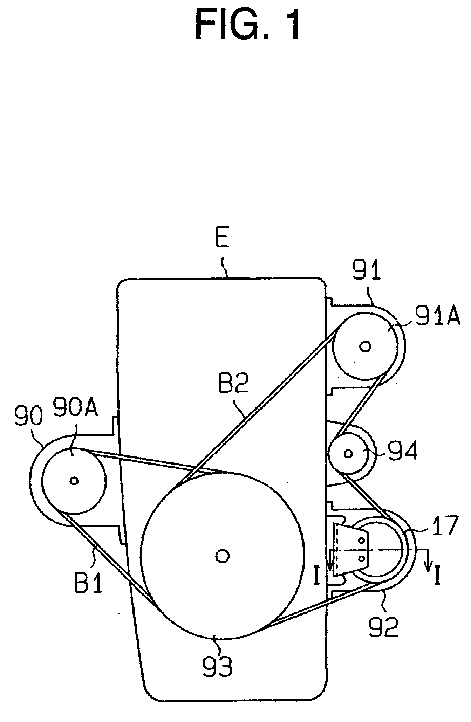

A first preferred embodiment of the present invention will now be described in reference to FIGs. 1 through 5.

Referring to FIG. 1, a diagram illustrates a schematic side view of an engine of a vehicle, an external drive source or a first drive source E and auxiliary rotary machines 90, 91, 92 fixedly connected to both sides of the engine E. The engine E has a crankshaft and a crank pulley 93 that is secured to the crankshaft, and the crank pulley 93 rotates integrally with the crankshaft. The auxiliary machines are a power steering pump 90, an alternator 91 and a compressor 92. These auxiliary machines 90, 91 and 92 each have respective pulleys 90A, 91A and 17. A belt B1 couples the pulley 90A of the power steering pump 90 to the crank pulley 93 and transmits power of the engine E to the power steering pump 90. A belt B2 couples the pulleys 91A, 17 to the crank pulley 93 and transmits the power of the engine E respectively to the alternator 91 and the compressor 92. Namely, both the pulleys 91A and 17 are coupled to the crank pulley 93 through the shared belt B2. Thus, the auxiliary machines 90, 91 and 92 are driven by the engine E. In addition, a tension device 94 is arranged for appropriately tensioning the belt B2. The belt B2 winds on the pulley 17 on a side that is opposite from the engine E.

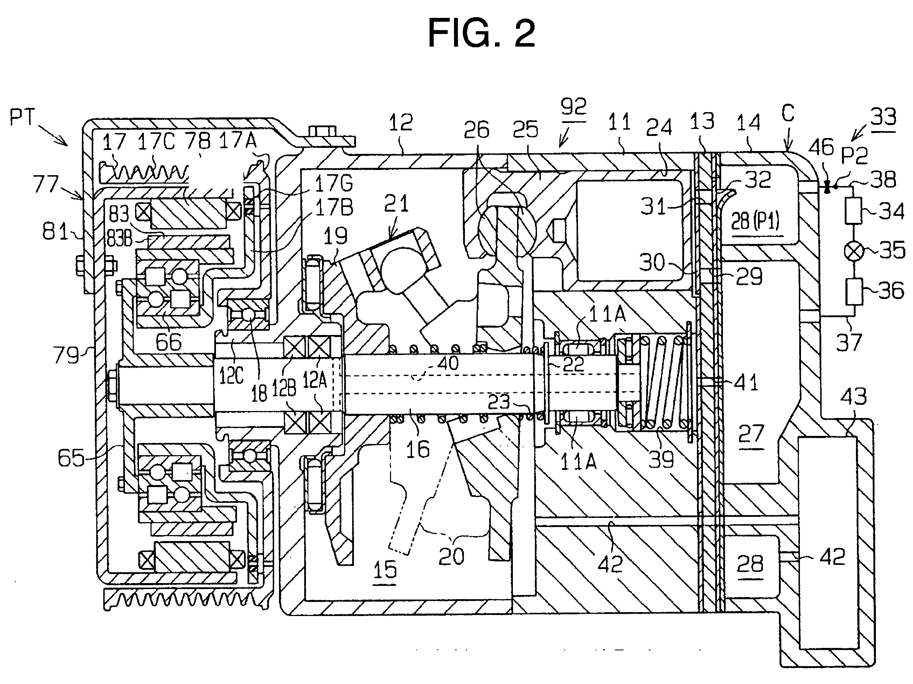

Now referring to FIG. 2, a diagram illustrates a schematic cross-sectional view that is taken along the line I-I in FIG. 1. The left side and the right side in FIG. 2 respectively correspond to the front side and the rear side of the compressor or the rotary machine 92. The compressor 92 includes a power transmitting mechanism PT and a compressor main body or a rotary machine main body C. The compressor main body C provides a part of an air-conditioning system for a vehicle. The power transmitting mechanism PT is connected to the compressor main body C. The power transmitting mechanism PT includes the pulley or a rotary body 17, a bearing 18, a one-way clutch assembly 66, an electric motor or a second drive source 77 and a connecting member 65.

The compressor main body C has a housing that includes a cylinder block 11, a front housing 12, a valve plate assembly 13 and a rear housing 14. The front housing 12 is connected to the front end of the cylinder block 11. The rear housing 14 is connected to the rear end of the cylinder block 11 through the valve plate assembly 13.

A crank chamber or a pressure control region 15 is defined between the cylinder block 11 and the front housing 12. A rotary shaft 16 extends through the crank chamber 15 and is rotatably supported by the housing. The front end of the rotary shaft 16 is supported by a radial bearing 12A that is fixedly connected to the front end wall of the front housing 12. The rear end of the rotary shaft 16 is supported by a radial bearing 11A that is fixedly connected to the cylinder block 11. The front end of the rotary shaft 16 extends through the front end wall of the front housing 12 and protrudes from the housing. The protruded front end of the rotary shaft 16 is operatively connected to the power transmitting mechanism PT. The front end of the rotary shaft 16 and the front end wall of the front housing 12 interpose a seal member 12B that is located near the front side of the radial bearing 12A. The seal member 12B isolates the inside of the housing from the outside of the housing.

A variable displacement piston type compression mechanism includes a cylinder bore 24 of the cylinder block 11, a rotary shaft 16, a lug plate 19, a swash plate or a cam plate 20, a hinge mechanism 21, a piston 25 and a shoe 26. The lug plate 19 is secured to the rotary shaft 16 in the crank chamber 15 so as to rotate integrally. The swash plate 20 is movably connected to the lug plate 19 through the hinge mechanism 21 in the crank chamber 15 and is supported by the rotary shaft 16. The hinge mechanism 21 allows the swash plate 20 to slide and tilt relative to the rotary shaft 16. Due to the above movable connection and the support by the rotary shaft 16, the swash plate 20 rotates synchronously with the lug plate 19 and the rotary shaft 16 and is tiltable with respect to the rotary shaft 16 in accordance with a slide along the axial direction of the rotary shaft 16.

An engaging ring 22 is connected to the rotary shaft 16. A spring 23 is placed between the engaging ring 22 and the swash plate 20. The minimum inclination angle of the swash plate 20 is regulated by the engaging ring 22 and the spring 23. The minimum inclination angle of the swash plate 20 is an inclination angle which is the closest to 90° with respect to the axial direction of the rotary shaft 16.

The cylinder block 11 includes the plurality of cylinder bores 24. Only one of the cylinder bores 24 is illustrated in FIG. 2. The cylinder bore 24 extends in the axial direction of the rotary shaft 16. Each of the cylinder bores 24 accommodates the single-headed piston 25 that reciprocates therein. The front opening and the rear opening of the cylinder bore 24 are respectively shut by the piston 25 and the valve plate assembly 13. A compression chamber is defined by the cylinder bore 24, the piston 25 and the valve plate assembly 13. The piston 25 engages the outer periphery of the swash plate 20 through the pair of shoes 26. Due to the above engagement, the rotation of the tilted swash plate 20 is converted to the reciprocation of the piston 25. The compression chamber varies its volume as the piston 25 reciprocates.

A suction chamber or a suction pressure region 27 and a discharge chamber or a discharge pressure region 28 are defined in the rear housing 14. Each front end of the suction chamber 27 and the discharge chamber 28 is shut by the valve plate assembly 13. As the piston 25 moves from a top dead center to a bottom dead center, refrigerant in the suction chamber 27 is introduced into the compression chamber through a suction port 29 by opening a suction valve 30. On the other hand, as the piston 25 moves from the bottom dead center to the top dead center, the introduced refrigerant in the compression chamber is compressed to a predetermined pressure value and is discharged to the discharge chamber 28 through a discharge port 31 by opening a discharge valve 32.

The compressor main body C and an external refrigerant circuit 33 constitute a refrigerant circuit of the air-conditioning system for a vehicle. The suction chamber 27 and the discharge chamber 28 are each connected to the external refrigerant circuit 33. The external refrigerant circuit 33 includes a condenser 34, a thermostatic expansion valve or a decompressor 35 and an evaporator 36. The opening degree of the expansion valve 35 is adjusted by a feedback control based on a temperature detected by a temperature sensitive cylinder and a vaporization pressure or a pressure at the outlet of the evaporator 36. The temperature sensitive cylinder is not shown in the drawing and is located near the outlet of the evaporator 36 or downstream of the expansion valve 36. The expansion valve 35 supplies the evaporator 36 with liquid refrigerant that complies with cooling load and regulates the flow rate of refrigerant in the external refrigerant circuit 33.

A conduit 37 is placed at the downstream region of the external refrigerant circuit 33. The refrigerant flows from the evaporator 36 to the suction chamber 27 through the conduit 37. Another conduit 38 is placed at the upstream region of the external refrigerant circuit 33. The refrigerant flows from the discharge chamber 28 to the condenser 34 through the conduit 38. As the refrigerant is introduced from the downstream region of the external refrigerant circuit 33 to the suction chamber 27, the compressor main body C compresses the refrigerant. Subsequently, the compressor main body C discharges the refrigerant to the discharge chamber 28 that is connected to the upstream region of the external refrigerant circuit 33.

The cylinder block 11 includes a shaft hole 39, and the rear end of the rotary shaft 16 extends through the shaft hole 39. The shaft hole 39 communicates with the crank chamber 15 through an axial passage 40 that is formed in the rotary shaft 16. The shaft hole 39 also communicates with the suction chamber 27 through a communication hole 41 that is formed in the valve plate assembly 13. As a result, the crank chamber 15 communicates with the suction chamber 27. The shaft hole 39, the axial passage 40 and the communication hole 41 constitute a bleed passage.

The housing includes a supply passage 42 that interconnects the discharge chamber 28 and the crank chamber 15. A control valve 43 is located in the supply passage 42 and regulates the opening degree of the supply passage 42. The regulation adjusts the balance of the amount of refrigerant flowing into and out of the crank chamber 15. Thus, the control valve 43 determines a crank chamber pressure Pc or a pressure in the crank chamber 15. A pressure differential between the crank chamber 15 and the compression chamber varies according to variation of the crank chamber pressure Pc. Due to the differential pressure change, the swash plate 20 varies its inclination angle. As a result, a stroke distance of the piston 25 is also adjusted. In other words, the displacement in the compressor main body C is adjusted per unit rotation of the rotary shaft 16. In the preferred embodiment, the above displacement per unit rotation of the rotary shaft 16 becomes substantially zero when the swash plate 20 is at the minimum inclination angle.

Still referring to FIG. 2, as the refrigerant flow rate Q increases in the refrigerant circuit, pressure loss increases per unit length of the refrigerant circuit or the conduit. Namely, the flow rate Q positively correlates to pressure loss or a pressure differential between pressure monitoring points P1 and P2 in the refrigerant circuit. Based upon the above relation, the flow rate Q is calculated by the pressure differential between the pressure monitoring points P1 and P2. Where PdH and PdL respectively denote pressure at the pressure monitoring points P1 and P2, the pressure differential $\Delta$PX is expressed as follows.

$$\Delta PX = PdH - PdL$$

The pressure monitoring point P1 is located in the discharge chamber 28 that corresponds to the most upstream region of the conduit 38 where a pressure is relatively high. The pressure monitoring point P2 is located at a predetermined distance from the location of the pressure monitoring point P1 in the conduit 38 in the downstream region where a pressure is relatively low.

Still referring to FIG. 2, a fixed throttle or a pressure differential increasing means 46 is placed in the conduit 38 between the pressure monitoring points P1 and P2. Even if a distance between the pressure monitoring points P1 and P2 is relatively short, the fixed throttle 46 increases the pressure differential $\Delta$PX between the points P1 and P2 by lowering the pressure PdL below the pressure PdH. For the above reason, the pressure monitoring point P2 is placed near the compressor main body C. Although the pressure PdL is lowered below the pressure PdH due to the fixed throttle 46, the pressure PdL is still sufficiently higher than the crank chamber pressure Pc.

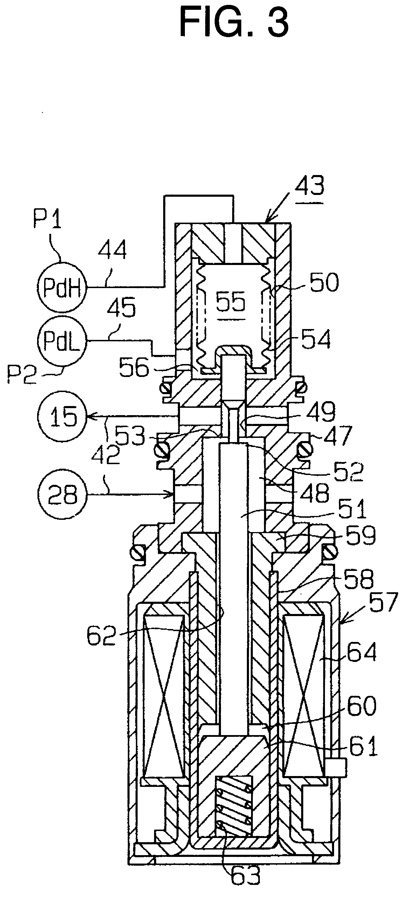

Now referring to FIG. 3, a diagram illustrates a schematic cross-sectional view of the control valve 43. A valve chamber 48, a communication passage 49 and a pressure sensing chamber 50 are defined in a valve housing 47 of the control valve 43. A rod 51 is movably placed in the valve chamber 48 and the communication passage 49 in an axial direction of the rod 51, that is, a vertical direction in the drawing. The communication passage 49 is separated from the pressure sensing chamber 50 by the upper end of the rod 51. The valve chamber 48 communicates with the discharge chamber 28 through an upstream region of the supply passage 42. The communication passage 49 communicates with the crank chamber 15 through a downstream region of the supply passage 42. The valve chamber 48 and the communication passage 49 constitute a portion of the supply passage 42.

The rod 51 includes a valve body portion 52 in its middle portion, and the valve body portion 52 is placed in the valve chamber 48. A step or a valve seat 53 is formed at a boundary between the valve chamber 48 and the communication passage 49. The communication passage 49 functions as a valve hole. The valve body portion 52 adjusts an opening degree of the supply passage 42. In other words, as the rod 51 moves from a lowest position shown in the drawing to a highest position where the valve body portion 52 contacts the valve seat 53, the communication passage 49 is shut.

A pressure sensing mechanism includes the pressure sensing chamber 50 and a pressure sensing member or a bellows 54. The pressure sensing member 54 is located in the pressure sensing chamber 50. The pressure sensing member 54 is substantially cylindrical in shape and has an opening at one end. The upper end of the pressure sensing member 54 is fixed to the valve housing 47. The lower end of the pressure sensing member 54 is fitted to the upper end of the rod 51. The pressure sensing chamber 50 is divided into a first pressure chamber 55 and a second pressure chamber 56 by the pressure sensing member 54. The first and second pressure chambers 55 and 56 are respectively inside and outside the pressure sensing member 54. A first pressure introducing passage 44 interconnects the pressure monitoring point P1 and the first pressure chamber 55. The pressure PdH at the pressure monitoring point P1 is applied to the first pressure chamber 55 through the first pressure introducing passage 44. Similarly, a second pressure introducing passage 45 interconnects the pressure monitoring point P2 and the second pressure chamber 56. The pressure PdL at the pressure monitoring point P2 is applied to the second pressure chamber 56 through the second pressure introducing passage 45. In addition, the pressure monitoring point P2 is placed near the compressor main body C. In the preferred embodiment, because of the location of the pressure monitoring point P2, the second pressure introducing passage 45 is relatively short.

An electromagnetic actuator or a pressure differential value changing means 57 is located at the lower side of the valve housing 47. The electromagnetic actuator 57 includes a cylindrical plunger housing 58 having an opening at one end, and the plunger housing 58 is coaxially located at the lower side of the valve housing 47. A center post 59 is fixedly inserted from the upper end opening of the plunger housing 58. Due to the insertion of the center post 59, a plunger chamber 60 is defined in the lower end of the plunger housing 58.

A plunger 61 is placed in the plunger chamber 60 and is movable in the axial direction of the rod 51. A guide hole 62 is centrally formed in the center post 59 and extends in the axial direction of the rod 51. The lower end of the rod 51 is placed in the guide hole 62 and is movable in the axial direction of the rod 51. The lower end of the rod 51 contacts the upper end of the plunger 61 in the plunger chamber 60. In the plunger chamber 60, a coil spring 63 is placed between the lower end of the plunger housing 58 and the plunger 61 for urging the plunger 61 toward the rod 51. Meanwhile, the rod 51 is urged toward the plunger 61 by spring or bellows force of the pressure sensing member 54. Namely, the plunger 61 accompanies the rod 51 when the plunger 61 and the rod 51 together move vertically. The bellows spring force is greater than the urging force of the coil spring 63.

A coil 64 is located outside the plunger housing 58 and extends between the center post 59 and the plunger 61. The coil 64 is supplied with electric current from a battery via a drive circuit in such a manner that a controller sends an external command to the drive circuit. The controller, the drive circuit and the battery are not shown in the drawing. Due to the above power supply to the coil 64, electromagnetic attraction is generated in proportion to the magnitude of the supplied electric current between the plunger 61 and the center post 59. Based upon the above electromagnetic attraction, urging force is upwardly applied to the plunger 61, and the plunger 61 pushes the rod 51. The electric current to the coil 64 is adjusted by an applied voltage by means of pulse width modulation (PWM) control or duty control.

A position of the valve body portion 52 or an opening degree of the control valve 43 is externally determined as follows. When the coil 64 is supplied with no electric current (duty ratio = 0%), the bellows spring force dominates to urge the rod 51 to the lowest position to fully open the communication passage 49. Under the above condition, as described in FIG. 2, as the crank chamber pressure Pc reaches a maximum value, the pressure differential also increases between the crank chamber pressure Pc and the compression chamber pressure. Namely, the pressure differential increases between the pressures applied to both sides of the pistons 25. As a result, the inclination angle of the swash plate 20 becomes minimum, and the displacement of the compressor main body C becomes minimum per unit rotation of the rotary shaft 16.

Still referring to FIG. 3, when the coil 64 is supplied with the electric current, the duty ratio is equal to or greater than a minimum duty ratio in its adjustable range (duty ratio > 0%). The sum of the electromagnetic force and the upward urging force of the coil spring 63 becomes greater than the downward urging force of the bellows spring force so that the rod 51 moves upwardly. Under the above condition, the electromagnetic force and the additional upward urging force of the coil spring 63 counter the downward force based on the pressure differential ΔPX and the additional downward urging force of the bellows spring force. Consequently, the position of the valve body portion 52 is determined relative to the valve seat 53 based on the balance resulting from the above described upward and downward forces.

When the duty ratio of the coil 64 is increased to further strengthen the electromagnetic attraction, the valve body portion 52 moves upwardly, and the opening degree of the communication passage 49 reduces. Due to the above reduced opening, the displacement of the compressor main body C increases. As a result, the refrigerant flow rate increases in the refrigerant circuit, and the pressure differential ΔPX also increases. On the contrary, when the duty ratio of the coil 64 is reduced to weaken the electromagnetic attraction, the valve body portion 52 of the rod 51 moves downwardly, and the opening degree of the communication passage 49 increases. Due to the above increase of the opening degree, the displacement of the compressor main body C reduces. As a result, the refrigerant flow rate reduces in the refrigerant circuit, and the pressure differential ΔPX also reduces.

On the other hand, a position of the valve body portion 52 or an opening degree of the control valve 43 is internally determined as follows. When the refrigerant flow rate reduces in the refrigerant circuit, the downward force to the rod 51 also reduces based upon the pressure differential ΔPX. Due to the above reduction of the downward force, the rod 51 initiates to move upwardly. As a result, the opening degree of the communication passage 49 reduces, the crank chamber pressure Pc tends to reduce, as described in FIG. 2. Due to the above reduction of the crank chamber pressure Pc, the swash plate 20 initiates to increase its inclination angle, and the displacement of the compressor main body C increases. As the displacement of the compressor main body C increases, the refrigerant flow rate also increases in the refrigerant circuit. Thus, the pressure differential ΔPX increases.

Still referring to FIG. 3, when the refrigerant flow rate increases in the refrigerant circuit, the downward force to the rod 51 increases based upon the pressure differential ΔPX. Then, the valve body portion 52 initiates to move downwardly, and the opening degree of the communication passage 49 increases. Due to the above increase of the opening degree, as described in FIG. 2, the crank chamber pressure Pc tends to increase, and the swash plate 20 initiates to reduce its inclination angle. As a result, the displacement of the compressor main body C reduces, and the refrigerant flow rate also reduces in the refrigerant circuit. Thus, the pressure differential ΔPX reduces.

Thereby, a target pressure differential or a set pressure differential is externally controlled by adjusting the duty ratio. The control valve 43 mechanically determines the position of the valve body portion 52 in accordance with variation of the pressure differential ΔPX so as to be close to the target pressure differential.

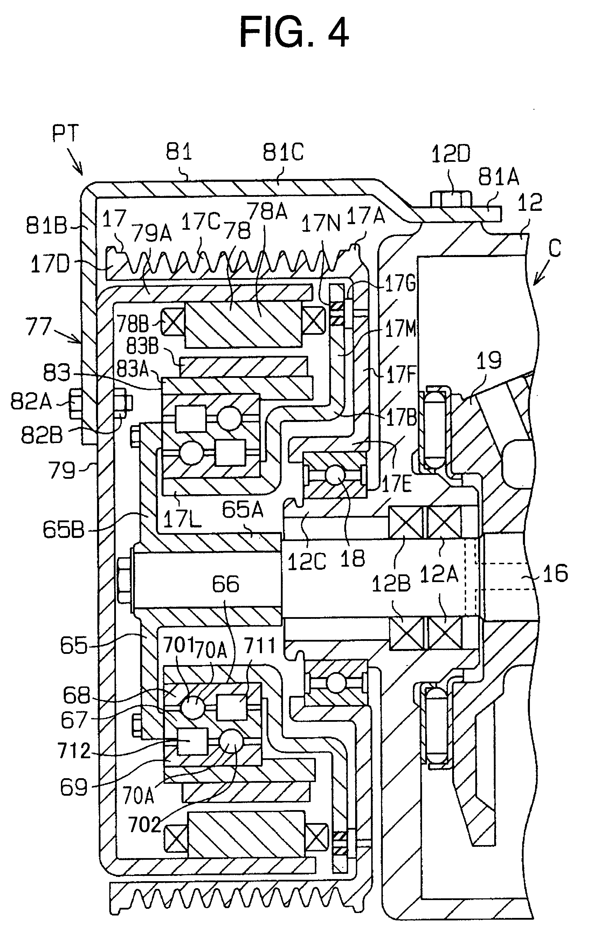

Now referring to FIG. 4, the pulley 17 includes an upstream pulley member 17A and a downstream pulley member 17B, power transmitting pins 17G and damping members 17N. The upstream pulley member 17A includes an outer cylindrical portion 17D, an inner cylindrical portion 17E and a disc-shaped portion 17F. The outer cylindrical portion 17D includes a power transmitting portion 17C on its outer circumference, and the above described belt B2 winds around the power transmitting portion 17C. The disc-shaped portion 17F interconnects the rear end of the outer cylindrical portion 17D and the rear end of the inner cylindrical portion 17E, and the outer cylindrical portion 17D, the inner cylindrical portion 17E and the disc-shaped portion 17F are integrated into a single component. Thus, the pulley 17 has an opening at one end and a closed surface or the disc-shaped portion 17F at the other end. The closed surface or the disc-shaped portion 17F is adjacent to the front housing 12.

Still referring to FIG. 4, a cylindrical support portion 12C extends from the front end wall of the front housing 12 to surround the front end of the rotary shaft 16. The inner cylindrical portion 17E and the cylindrical support portion 12C interpose the bearing 18. Namely, the upstream pulley member 17A is rotatably supported by the cylindrical support portion 12C.

The plurality of power transmitting pins, power transmission cutting means or breaking members 17G is fixed to the radially outer portion of the disc-shaped portion 17F on the front side. Although only two power transmitting pins 17G are illustrated in the drawing, the plurality of power transmitting pins 17G is located at equiangular positions on the disc-shaped portion 17F. The power transmitting pins 17G include a cylindrical portion and a collar portion that is integrally formed on the axially middle portion of the cylindrical portion. The rear end of the power transmitting pin 17G is fixedly inserted into a through hole formed in the disc-shaped portion 17F while the front end of the power transmitting pin 17G protrudes in the axial direction of the rotary shaft 16. In the preferred embodiment, the power transmitting pins 17G are made of sintered metal. The sintered metal has a fatigue limit ratio $\sigma_W/\sigma_B$ of approximately 0.5 where $\sigma_W$ and $\sigma_B$ respectively denote fatigue strength and tensile strength.

The downstream pulley member 17B is located in front of the disc-shaped portion 17F. The downstream pulley member 17B includes an inner cylindrical portion 17L and a flange 17M. The flange 17M extends radially from the rear end of the inner cylindrical portion 17L. The inner cylindrical portion 17L and the flange 17M are integrated into a single component.

The damping members 17N are cylindrical rubbers and are fixedly placed in through holes in the radially outer portion of the flange 17M so that the damping members receive the corresponding power transmitting pins 17G. Accordingly, in the pulley 17 of the preferred embodiment, as the power is transmitted to the upstream pulley member 17A through the above described belt B2, the power is subsequently transmitted to the downstream pulley member 17B through the power transmitting pins 17G and the damping members 17N. In other words, the power transmitting pins 17G and the damping members 17N are placed in a power transmitting path between the upstream pulley member 17A and the downstream pulley member 17B.

The connecting member 65 is secured to the front end of the rotary shaft 16 and rotates integrally with the rotary shaft 16. The connecting member 65 includes a cylindrical portion 65A and a disc-shaped portion 65B. The cylindrical portion 65A is fixedly connected to the outer circumferential surface of the rotary shaft 16. The disc-shaped portion 65B extends outwardly from the front end of the cylindrical portion 65A in a radial direction of the rotary shaft 16. The radially outer side of the disc-shaped portion 65B is connected to the one-way clutch assembly 66.

The one-way clutch assembly 66 includes a first ring 67, a second ring 68 and a third ring 69. The first ring 67 is screw-on to the disc-shaped portion 65B and rotates integrally with the disc-shaped portion 65B. The second ring 68 is fixedly fitted to the inner cylindrical portion 17L and is surrounded by the first ring 67. The second ring 68 rotates integrally with the inner cylindrical portion 17L. The third ring 69 is fixedly connected to a rotor 83 of the electric motor 77 and is located at the radially outer side of the first ring 67 so as to surround the first ring 67. The third ring 69 rotates integrally with the rotor 83.

In the first preferred embodiment, a one-way power transmission clutch unit includes first, second and third power transmission units. The first power transmission unit includes the first ring 67 and the disc-shaped portion 65B and is connected to the rotary shaft 16. The second power transmission unit includes the second ring 68 and is connected to the pulley 17. The second power transmission unit is ultimately coupled to the engine E. The third power transmission unit includes the third ring 69 and is connected to the electric motor 77. The first one-way clutch mechanism 711 is interposed between the first and second power transmission units. The second one-way clutch mechanism 712 is interposed between the first and third power transmission units.

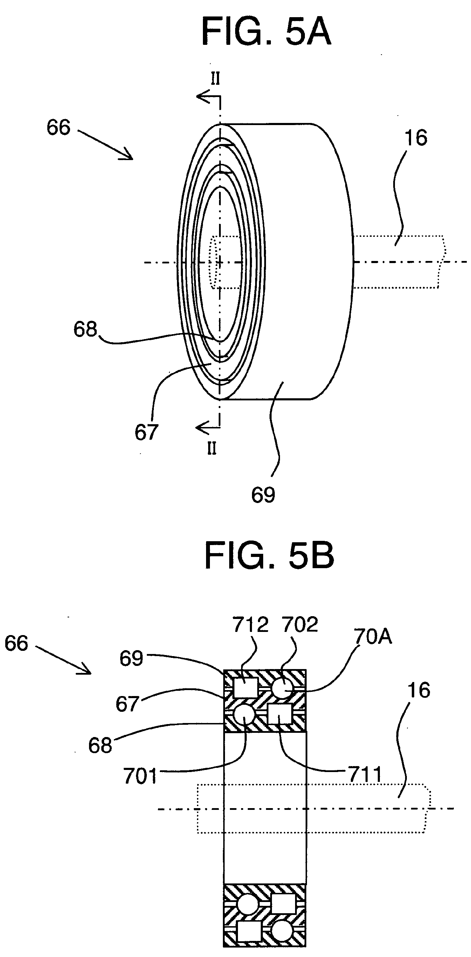

Now referring to FIG. 5A, a diagram illustrates a perspective view of the one-way clutch assembly 66 that is available in a single part. The first, second and third rings 67, 68, 69 are coaxially located and substantially overlapped with each other. The first, second and third rings 67, 68, 69 have a different size in diameter. The first ring 67 is located between the second ring 68 and the third ring 69.

Now referring to FIG. 5B, the one-way clutch assembly 66 also includes first and second bearing mechanisms 701, 702 and first and second one-way clutch mechanisms 711, 712. The second ring 68 and the first ring 67 interpose the pair of first bearing mechanism 701 and first one-way clutch mechanism 711 which are aligned in the axial direction of the rotary shaft 16. The second ring 68 rotates relative to the first ring 67 or transmits power to the first ring 67. For example, the second ring 68 is connected to the pulley 17 of FIG. 4 and transmits rotational power of the pulley 17 to the first ring 67 that is coupled to the rotary shaft 16 through the first one-way clutch mechanism 711. The third ring 69 and the first ring 67 also interpose the pair of second bearing mechanism 702 and second one-way clutch mechanism 712 which are aligned in the axial direction of the rotary shaft 16. The third ring 69 rotates relative to the first ring 67 or transmits power to the first ring 67. For example, the third ring 69 is connected to the electric motor 77 of FIG. 4 and transmits rotational power of the electric motor 77 to the first ring 67 that is coupled to the rotary shaft 16 through the second one-way clutch mechanism 712. Each of the bearing mechanisms 701, 702 includes a plurality of balls or rolling components 70A that is aligned in a circumferential direction.

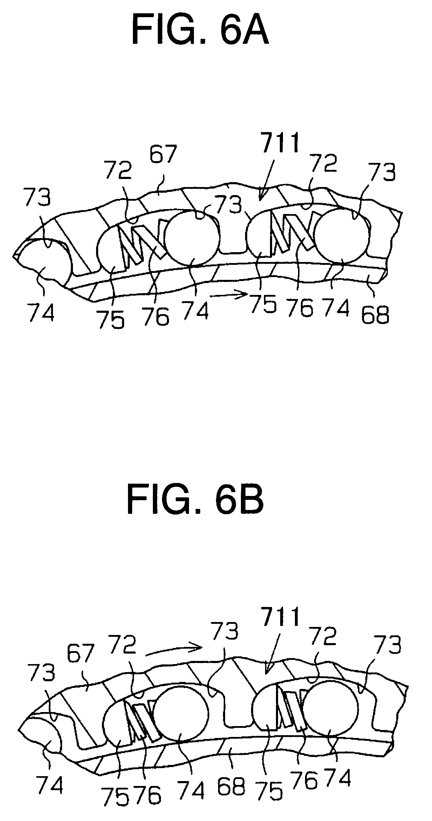

Now referring to FIGs. 6A and 6B, in the first one-way clutch mechanism 711, a plurality of recesses 72 is formed in the inner circumferential wall of the first ring 67 at equiangular positions around the rotary shaft 16. Each recess 72 accommodates a roller 74 that is placed in parallel with the rotary shaft 16. A depth of clockwise or right end of each recess 72 is smaller than that of the middle so that a power transmitting surface 73 is formed at the right end of each recess 72. As illustrated in FIG. 6A, the roller 74 is movable in the recess 72 and in contact with the power transmitting surface 73 at a contact position. The roller 74 leaves the power transmitting surface 73 at a non-contact position as illustrated in FIG. 6B. The roller 74 travels between the contact position and the non-contact position. A spring seat member 75 is located at an opposite end relative to the power transmitting surface 73 in each recess 72. A spring 76 is placed between the spring seat member 75 and the roller 74 for urging the roller 74 toward the power transmitting surface 73.

Referring to FIG. 6A, as the power is transmitted from the engine E to the pulley 17, the second ring 68 rotates in the direction indicated by an arrow when the engine E or the pulley 17 rotates. Due to the above rotation, the roller 74 travels to the contact position to contact the power transmitting surface 73 by urging force of the spring 76. The power transmitting surface 73 and the outer circumferential surface of the second ring 68 engage the roller 74 due to the shape of the recess 72 or a wedge function. As a result, the first ring 67 is rotated in the same direction as the second ring 68. As described with respect to FIG. 4, the power of the engine E is transmitted to the connecting member 65 through the pulley 17 and the first one-way clutch mechanism 711, and the rotary shaft 16 is regularly rotated.

Referring to FIG. 6B, on the other hand, as the first ring 67 initiates to rotate in the direction indicated by an arrow when the engine E or the pulley 17 stops its rotation, the roller 74 is disengaged from the contact position against the urging force of the spring 76. As a result, the first ring 67 idles relative to the second ring 68 and fails to transmit its rotation.

Referring back to FIG. 4, the brushless type electric motor 77 includes a stator 78, a substantially cylindrical stator side support member 79, a housing side support member 81, bolts 82A, nuts 82B and a rotor 83. The electric motor 77 is substantially located in a donut-shaped space defined by the outer cylindrical portion 17D and the downstream pulley member 17B. The stator side support member 79, the stator 78 and the rotor 83 are substantially located in the donut-shaped space which is partially defined by the power transmitting portion 17C. The stator side support member 79 is anchored to the front housing 12 through the housing side support member 81. The substantially L-shaped housing side support member 81 includes a proximal portion 81A, a fixing portion 81B and a connecting portion 81C. The proximal portion 81A is fixedly connected to the front housing 12 by a bolt 12D. The fixing portion 81B is fixedly connected to the stator side support member 79 by the bolt 82A and the nut 82B. The connecting portion 81C interconnects the proximal portion 81A and the fixing portion 81B. The connecting portion 81C radially extends over the power transmitting portion 17C so that the above described belt B2 does not contact the connecting portion 81C. The stator 78 is secured to the inner circumferential surface of a cylindrical portion 79A of the stator side support member 79. The stator 78 includes a stator iron core 78A and a coil 78B that winds around the stator iron core 78A. The rotor 83 is located inside the cylindrical portion 79A of the stator side support member 79 to face the stator 78. The electric motor 77 is an inner rotor type. That is, the rotor 83 is located inside the stator 78. The rotor 83 includes a cylindrical annular proximal portion 83A and a permanent magnet 83B that is secured to the outer circumferential surface of the annular proximal portion 83A.

The electric motor 77 drives the rotor 83 by an interaction of magnetic force from the rotor 83 and the stator 78 due to the electric current supply to the coil 78B. The coil 78B is electrically connected to a battery through a drive circuit. The drive circuit controls electric current from the battery to the coil 78B in response to a command from a controller. The battery, the drive circuit and the controller are not shown in the drawing.

The third ring 69 is fixedly connected to the inner circumferential surface of the annular proximal portion 83A so as to rotate integrally with. The pair of second bearing mechanism 702 and second one-way clutch mechanism 712 between the third ring 69 and the first ring 67 has substantially the identical structure to the pair of mechanisms 701 and 711. For the above reason, the description of the substantially identical components is omitted. In the third ring 69 and the first ring 67, a roller 74 in each recess 72 formed in the inner circumferential surface of the third ring 69 transmits the power between the third ring 69 and the first ring 67.

In the first preferred embodiment, the first and second rings 67, 68, the first bearing mechanism 701 and the first one-way clutch mechanism 711 constitute a first one-way clutch that is located in a first power transmission path between the pulley 17 and the rotary shaft 16. The first and third rings 67, 69, the second bearing mechanism 702 and the second one-way clutch mechanism 712 constitute a second one-way clutch that is located in a second power transmission path between the electric motor 77 and the rotary shaft 16. Namely, the one-way clutch assembly 66 incorporates the first and second one-way clutches that share the first ring 67. In the first preferred embodiment, the one-way clutch assembly 66 is substantially located in the donut-shaped space defined by the outer cylindrical portion 17D and the downstream pulley member 17B. The second one-way clutch mechanism 712 is placed inside the rotor 73 and between the rotor 73 and the rotary shaft 16.

In the first preferred embodiment, when the engine E is running, the power of the engine E is regularly transmitted to the rotary shaft 16 through the pulley 17 and the first one-way clutch. On the other hand, when the engine E is stopped, the electric motor 77 is activated, and the power of the electric motor 77 is transmitted to the rotary shaft 16 through the second one-way clutch.

The controller controls the drive circuit of the electric motor 77 to disrupt electric current to the coil 78B during the engine E operation. The power of the engine E is transmitted from the second ring 68 to the first ring 67 through the first one-way clutch mechanism 711 so as to rotate the rotary shaft 16. Namely, the first one-way clutch is in a connected state for the power transmission during the engine E operation. Meanwhile, the first ring 67 idles relative to the third ring 69 and fails to transmit the power to the third ring 69 through the second one-way clutch mechanism 712. Namely, the second one-way clutch is in a disconnected state during the engine E operation.

A cogging torque is a minimum load for rotating the rotor 83 based upon magnetic force of the permanent magnet 83B. Sufficient torque from the rotary shaft 16 is needed to overcome the cogging torque to initiate the rotation of the rotor 83. In the first preferred embodiment, even if the second one-way clutch is in a disconnected state, some torque is transmitted from the first ring 67 to the third ring 69 through the second one-way clutch mechanism 712. However, the transmitted torque does not overcome the above cogging torque and fails to rotate the rotor 83. In summary, when the coil 78B is not supplied with electric current, even if the rotary shaft 16 rotates, the rotor 83 fails to rotate.

When air-conditioning is required for cooling after the engine E is stopped, the controller sends a command to the drive circuit so that the drive circuit supplies the coil 78B with electric current to actuate the electric motor 77. Then, the rotor 83 of the electric motor 77 generates the rotational power that is transmitted from the third ring 69 to the first ring 67 through the second one-way clutch mechanism 712. Thus, the power generated by the electric motor 77 is transmitted to the rotary shaft 16. Namely, the second one-way clutch is in a connected state for the power transmission to activate air-conditioning in a passenger compartment after the engine E has stopped.

Meanwhile, the first ring 67 idles relative to the second ring 68 and fails to transmit the power to the second ring 68. Namely, the first one-way clutch is in a disconnected state for the power transmission during the electric motor 77 operation. As a result, the power of the electric motor 77 does not transmit to the pulley 17. Generally, the engine E drives the compressor main body C longer than the electric motor 77.

In the first preferred embodiment, the power is initially transmitted from the engine E to the upstream pulley member 17A. An offset between the pulley members 17A and 17B causes stress on bearing members such as the radial bearing 12A, the first bearing mechanism 701 and the bearing 18. The power is transmitted from the upstream pulley member 17A to the downstream pulley member 17B through the damping members 17N and the power transmitting pins 17G. Since the damping members 17N are placed in a power transmission path between the upstream pulley member 17A and the downstream pulley member 17B, the offset between central axes of the pulley members 17A and 17B is absorbed. That is, the damping member 17N elastically deforms and reduces the above stress. In addition, vibration of the rotary shaft 16 or torque variation due to compression reactive force is generated in the compression mechanism. However, the damping member 17N restricts the above vibration to transmit from the downstream pulley member 17B to the upstream pulley member 17A by its damping function. In addition, the above vibration includes mainly two rotational components. In the first preferred embodiment, the first one-way clutch including the first one-way clutch mechanism 711 is placed in a power transmission path between the pulley 17 and the rotary shaft 16. The first one-way clutch mechanism 711 substantially does not transmit one of the above components from the rotary shaft 16 to the pulley 17.

In the first preferred embodiment, when torque transmitted in a predetermined normal range between the upstream pulley member 17A and the downstream pulley member 17B does not damage the engine E, the power is continuously transmitted from the engine E to the rotary shaft 16. On the other hand, when abnormality such as a deadlock occurs in the compressor main body C and the transmission torque exceeds a predetermined value, the power transmitting pins 17G break due to the above excessive load. Due to the above break, the power transmission is blocked between the upstream pulley member 17A and the downstream pulley member 17B. As a result, the engine E is prevented from being damaged by the excessive transmission torque.

According to the first preferred embodiment, the following advantageous effects are obtained.

(1) The first and the second one-way clutches of the one-way clutch assembly 66 are respectively placed in first and second power transmission paths between the pulley 17 and the rotary shaft 16 and between the electric motor 77 and the rotary shaft 16. The above two one-way clutches permit one of the power transmission paths to be connected while they leave the other disconnected. For example, the one-way clutches enable the rotary shaft 16 to be driven by drive power transmitted from the engine E, while they leave the rotor 83 of the electric motor 77 not driven by the rotary shaft 16.

Meanwhile, when the rotor 83 is driven by the rotation of the rotary shaft 16, the rotary shaft 16 needs to overcome the cogging torque due to the permanent magnet 83B to initiate the rotation of the rotor 83. The torque overcoming the cogging torque corresponds to rotational load of the rotary shaft 16. Namely, the cogging torque becomes extra load to drive the rotary shaft 16. In the first preferred embodiment, the first one-way clutch is in a connected state, while the second one-way clutch is in a disconnected state. The first one-way clutch enables the rotary shaft 16 to be driven by the engine E. As a result, the rotational load is effectively suppressed.

Incidentally, when the size of the electric motor 77 is reduced and is configured to drive the rotary shaft 16 at a relatively low speed. Even if the rotary shaft 16 is being rotated at a relatively high speed by the pulley 17, the rotor 83 cannot be rotated when the second one-way clutch is in a disconnected state. In other words, excessive induced electromotive force is prevented from being generated at the coil 78B due to the forced rotation of the rotor 83. Due to the above prevention, heating due to the excessive induced electromotive force upon the electric motor 77 will also be prevented. In the first preferred embodiment, the first and the second one-way clutches are respectively located in the first and second power transmission paths between the pulley 17 and the rotary shaft 16 and between the electric motor 77 and the rotary shaft 16. The structure of the first preferred embodiment is particularly effective to prevent the electric motor 77 from being rotated at a relatively high speed when the electric motor 77 is used in the range of a relatively low speed.

(2) The one-way clutch assembly 66 includes the first one-way clutch and the second one-way clutch. In other words, the first and second one-way clutches are integrated. In comparison to a structure that separately has the first one-way clutch and the second one-way clutch, a portion of the clutches is shared in the first preferred embodiment. As a result, the number of the components is reduced.

Meanwhile, when the first and second one-way clutches are separated, each one-way clutch needs to be separately assembled to the compressor main body C. As a result, a manufacturing process tends to increase. On the contrary, in the first preferred embodiment, the first and second one-way clutches are integrated. In comparison to the separate one-way clutches, a manufacturing process reduces, and costs are efficiently reduced.

(3) In the one-way clutch assembly 66, the first, second and third rings 67, 68, 69 are coaxially aligned in the radial direction of the rotary shaft 16. The second and third rings 68, 69 each are operatively connected to the first ring 67 that integrally rotates with the rotary shaft 16. In comparison to a structure that includes two one-way clutches each having two rings and being respectively placed in power transmission paths between the rotary shaft 16 and the pulley 17 and between the rotary shaft 16 and the electric motor 77, the number of the rings reduces in the first preferred embodiment. In other words, the number of the independent components reduces in the compressor 92. As a result, the size of the compressor 92 will be compact.

(4) In the first preferred embodiment, the electric motor 77 is an inner rotor type, and the second one-way clutch is located in the rotor 83 and between the rotor 83 and the rotary shaft 16. A connecting structure that connects the rotor 83 to the second one-way clutch is simple in the first preferred embodiment. In other words, in comparison to a structure that includes an outer rotor type electric motor and a second one-way clutch located in a stator, no additional connecting member is needed to connect the rotor 83 to the second one-way clutch so as to overpass the stator 78. The outer rotor type electric motor includes a stator and a rotor that is located outside the stator in a radial direction of a rotary shaft. Magnet force is applied to the rotor to generate rotational power. In the first preferred embodiment, the permanent magnet 83B is connected to the third ring 69 through the annular proximal portion 83A. However, the annular proximal portion 83A has a cylindrical shape and does not overpass the stator 78. The permanent magnet 83B is merely secured to the outer circumferential surface of the annular proximal portion 83A, and the third ring 69 is connected to the inner circumferential surface of the annular proximal portion 83A.

(5) In the first preferred embodiment, the second one-way clutch is placed inside the rotor 83 and between the rotor 83 and the rotary shaft 16. In comparison to a structure that includes an outer rotor type electric motor and a second one-way clutch located outside the rotor, the diameter of the second one-way clutch is reduced in the first preferred embodiment. As the diameter of the second one-way clutch reduces, relative speed between the first and third rings 67 and 69 reduces when the first ring 67 idles relative to the third ring 69. As a result, durability of the second one-way clutch improves on idling rotation. It is effective when the second one-way clutch is in a disconnected state longer than the first one-way clutch, that is, when the engine E drives the compressor main body C longer than the electric motor 77.

(6) In the first preferred embodiment, the electric motor 77 and the one-way clutch assembly 66 are substantially located in the donut-shaped space defined by the outer cylindrical portion 17D and the downstream pulley member 17B. In comparison to a structure that an electric motor and a one-way clutch unit are located outside the above space, the size of the compressor 92 is reduced in the axial direction of the rotary shaft 16 in the first preferred embodiment.

(7) The power transmission cutting means or the power transmitting pin 17G is placed in the power transmission path between the pulley 17 and the rotary shaft 16. Due to the above structure, if abnormality such as a deadlock occurs in the compressor main body C, the power transmission cutting means 17G prevents excessive load from damaging the engine E.

(8) The power transmission cutting means, the breaking member or the power transmitting pin 17G is made of sintered metal that has a relatively low ductility. When excessive transmission torque is applied to the power transmitting pin 17G, it is easy to set a threshold value to break the power transmitting pin 17G.

(9) The damping member 17N is placed in the power transmission path between the upstream pulley member 17A and the downstream pulley member 17B. Due to the above structure, the damping member 17N absorbs rotational vibration that is caused by the offset due to a dimensional tolerance between the rotational axes of the upstream and downstream pulley members 17A and 17B. Namely, the damping member 17N deforms itself to reduce stress due to the above offset on the bearing members such as the radial bearing 12A, the bearing mechanism 701 and the bearing 18. As a result, durability of the compressor 92 improves.

(10) The damping member 17N damps the rotational vibration or the transmission torque variation that is transmitted from the downstream pulley member 17B to the upstream pulley member 17A. As a result, resonance due to the above transmission torque variation is also restricted between the engine E and the rotary shaft 16.

(11) In the preferred embodiment, the compression mechanism is designed to reduce its displacement per unit rotation of the rotary shaft 16 to approximately zero. Furthermore, the above displacement is optionally adjusted to approximately zero while the rotary shaft 16 is being driven. Namely, when air-conditioning is not required, load is reduced for driving the rotary shaft 16 to approximately zero.

(12) The displacement or the refrigerant flow rate per unit time in the compressor main body C mainly correlates with the load torque of the compressor main body C. In the first preferred embodiment, the controller sends an external command to the control valve 43 and directly controls the above displacement. For example, the refrigerant flow rate is accurately and responsively maintained below a predetermined value without a sensor for detecting the refrigerant flow rate.

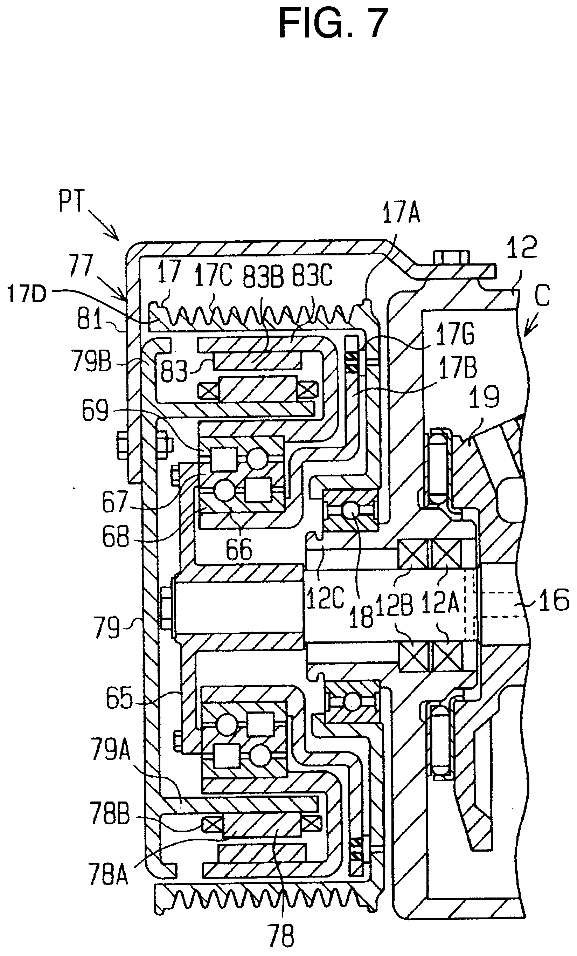

A second preferred embodiment of the present invention will now be described in reference to FIG. 7. The electric motor 77 of the second preferred embodiment is modified from that of the first preferred embodiment. The other components are substantially identical to those of the first preferred embodiment. The same reference numerals in the second embodiment denote the corresponding components in the first embodiment, and description of the substantially identical components is omitted.

Now referring to FIG. 7, a diagram illustrates an enlarged schematic cross-sectional view of a power transmitting mechanism. The electric motor 77 is an outer rotor type. The rotor 83 includes the permanent magnet 83B and the annular connecting member 83C. The permanent magnet 83B is located outside the stator 78 in a radial direction of the rotary shaft 16. The connecting member 83C connects the permanent magnet 83B with the third ring 69 of the second one-way clutch, and the permanent magnet 83B rotates integrally with the third ring 69. The connecting member 83C is substantially U-shaped in cross-section that is taken along a hypothetical plane that includes the axis of the rotary shaft 16. In other words, the connecting member 83C extends by the stator 78 to place the permanent magnet 83B at an opposite position to the stator 78.

The stator 78 is secured to the outer circumferential surface of the cylindrical portion 79A of the stator side support member 79. In the second preferred embodiment, an annular cover portion 79B is provided at the radially outer side of the stator side support member 79 so as to substantially close an opening between the outer cylindrical portion 17D of the upstream pulley member 17A and the cylindrical portion 79A at the front side of the stator 78 and the permanent magnet 83B.

In addition to the advantageous effects mentioned in the paragraph (1) through (3) and (5) through (12) in the first preferred embodiment, the following advantageous effects are obtained.

(13) In the second preferred embodiment, the electric motor 77 is the outer rotor type. In comparison to an inner rotor type electric motor, the rotor 83 that contains the permanent magnet 83B is optionally located remote from the rotary shaft 16 in the second preferred embodiment. When a distance increases between the permanent magnet 83B and the rotary shaft 16, the moment of the permanent magnet 83B also increases. In other words, output torque of the electric motor 77 increases with the same magnet force of the permanent magnet 83B.

The present invention is not limited to the above-described preferred embodiment, but is modified into the following alternative embodiments.

In alternative embodiments to the preferred embodiments, the electric motor is an outer rotor type, and the one-way clutch unit is placed outside the rotor in a radial direction of the rotary shaft.

In alternative embodiments to the preferred embodiments, the stator includes the permanent magnet, and the rotor that includes a coil and an iron core is supplied with electric current to generate rotational power.

In alternative embodiments to the preferred embodiments, the first ring 67 and the connecting member 65 are integrated into a single component.

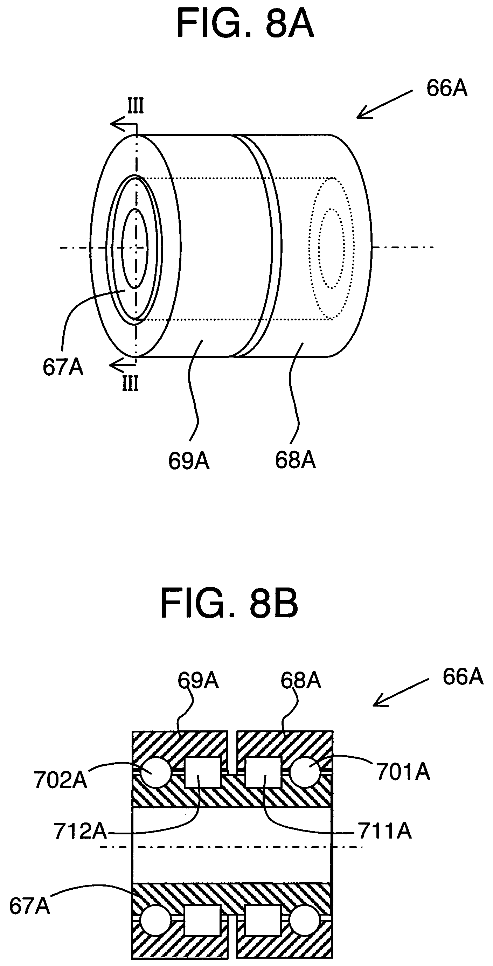

In alternative embodiments to the above preferred embodiments including the one-way clutch assembly 66, referring to FIG. 8A, a one-way clutch assembly 66A is available in a single part and includes substantially cylindrical first, second and third rings 67A, 68A, 69A that are coaxially located with each other. The first ring 67A is smaller in diameter than the second and third rings 68A, 69A and is substantially located inside the second and third rings 68A, 69A. Namely, the second and third rings 68A, 69A are aligned in the axial direction of the first ring 67A on the outer circumferential surface of the first ring 67A.

Referring to FIG. 8B, the first and second rings 67A, 68A interpose a pair of first one-way clutch mechanism 711A and first bearing mechanism 701A for selectively transmitting power therebetween. The first and third rings 67A, 69A interpose a pair of second one-way clutch mechanism 712A and second bearing mechanism 702A for selectively transmitting power therebetween. The second ring 68A is the part of first one-way clutch. The third ring 69A is the part of second one-way clutch. The first and second one-way clutch share the first ring 67A. For example, the second and third rings 68A and 69A are respectively coupled to first and second drive sources, while the first ring 67A is coupled to a rotary shaft. The second ring 68A transmits power of the first drive source to the first ring 67A through the first one-way clutch mechanism 711A, while the second one-way clutch mechanism 712A blocks the power transmission to the third ring 69A. The third ring 69A transmits power of the second drive source to the first ring 67A through the second one-way clutch mechanism 712A, while the first one-way clutch mechanism 711A blocks the power transmission to the second ring 68A. Thus, the power of the first and second drive source is alternately transmitted to the rotary shaft.

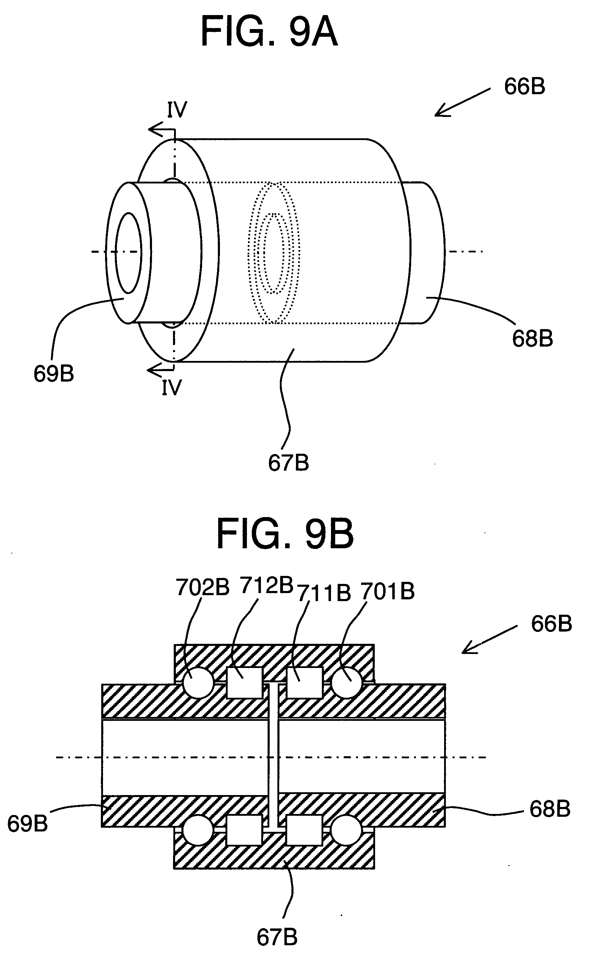

In alternative embodiments to the preferred embodiments including the one-way clutch assembly 66, referring to FIG. 9A, a one-way clutch assembly 66B is available in a single part and includes substantially cylindrical first, second and third rings 67B, 68B, 69B that are coaxially located with each other. The first ring 67B is larger in diameter than the second and third rings 68B, 69B, and the second and third rings 68B, 69B are substantially located inside the first ring 67B. Namely, the second and third rings 68B, 69B are aligned in the axial direction of the first ring 67B on the inner circumferential surface of the first ring 67B.

Referring to FIG. 9B, the first and second rings 67B, 68B interpose a pair of first one-way clutch mechanism 711B and first bearing mechanism 701B for selectively transmitting power therebetween. The first and third rings 67B, 69B interpose a pair of second one-way clutch mechanism 712B and second bearing mechanism 702B for selectively transmitting power therebetween. The second ring 68B is the part of first one-way clutch. The third ring 69B is the part of second one-way clutch. The first and second one-way clutch share the first ring 67B. For example, the second and third rings 68B and 69B are respectively coupled to first and second drive sources, while the first ring 67B is coupled to a rotary shaft. The second ring 68B transmits power of the first drive source to the first ring 67B through the first one-way clutch mechanism 711B, while the second one-way clutch mechanism 712B blocks the power transmission to the third ring 69B. The third ring 69B transmits power of the second drive source to the first ring 67B through the second one-way clutch mechanism 712B, while the first one-way clutch mechanism 711B blocks the power transmission to the second ring 68B. Thus, the power of the first and second drive source is alternately transmitted to the rotary shaft.

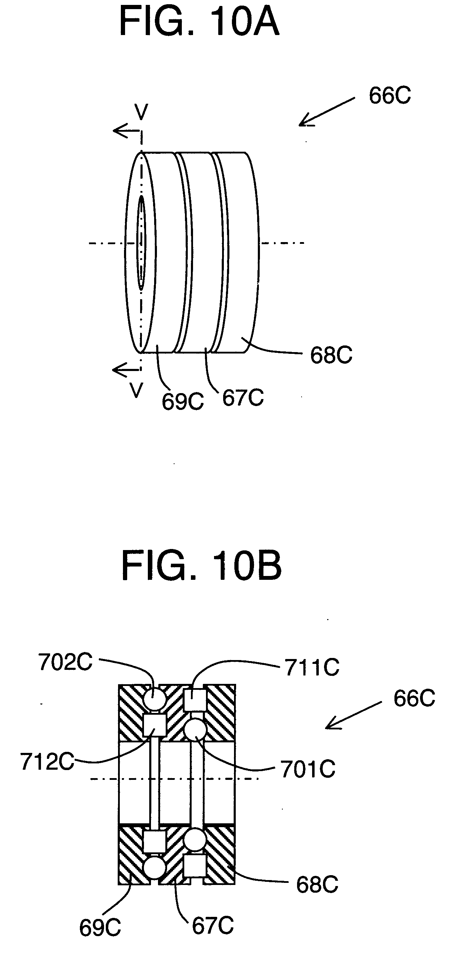

In alternative embodiments to the preferred embodiments including the one-way clutch assembly 66, referring to FIG. 10A, a one-way clutch assembly 66C is available is a single part and includes substantially cylindrical first, second and third rings 67C, 68C, 69C that have substantially the same size in diameter. The first, second and third rings 67C, 68C, 69C are coaxially located with each other, and the first ring 67C is located between the second and third rings 68C, 69C. Namely, the first, second and third rings 67C, 68C, 69C are aligned in the axial direction of the first ring 67C and are adjacent with each other.

Referring to FIG. 10B, the first and second rings 67C, 68C interpose a pair of first one-way clutch mechanism 711C and first bearing mechanism 701C for selectively transmitting power therebetween. The first and third rings 67C, 69C interpose a pair of second one-way clutch mechanism 712C and second bearing mechanism 702C for selectively transmitting power therebetween. The second ring 68C is the part of first one-way clutch. The third ring 69C is the part of second one-way clutch. The first and second one-way clutch share the first ring 67C. For example, the second and third rings 68C and 69C are respectively coupled to first and second drive sources, while the first ring 67C is coupled to a rotary shaft. The second ring 68C transmits power of the first drive source to the first ring 67C through the first one-way clutch mechanism 711C, while the second one-way clutch mechanism 712C blocks the power transmission to the third ring 69C. The third ring 69C transmits power of the second drive source to the first ring 67C through the second one-way clutch mechanism 712C, while the first one-way clutch mechanism 711C blocks the power transmission to the second ring 68C. Thus, the power of the first and second drive source is alternately transmitted to the rotary shaft.

In alternative embodiments to the preferred embodiments, the electric motor, the first and second one-way clutches are located outside a space that is partially defined by the power transmitting portion 17C.

In alternative embodiments to the preferred embodiments, the electric motor, the first and second one-way clutches are located between the pulley and the front housing. The pulley is not limited to be directly and rotatably supported by the front housing. For example, the pulley is indirectly supported by the front housing through a support member that is fixed to the front housing and that extends over the electric motor and the first and second one-way clutches.

In alternative embodiments to the preferred embodiments, the fatigue limit ratio $\sigma_W/\sigma_B$ of the sintered metal for the breaking member is not limited to approximately 0.5 as far as the threshold value for breaking the breaking member is set in a adequate range when transmission torque exceeds the threshold value on the breaking member.

In alternative embodiments to the preferred embodiments, the breaking member is made of a material other than metal. As far as the material breaks when it experiences transmission torque that exceeds a threshold value, any material such as low carbon steel, resin and ceramic is applicable.

In alternative embodiments to the preferred embodiments, the power transmission cutting means includes an engaging member instead of the breaking member. For example, the engaging member is placed in a power transmission path between the upstream rotary body and the downstream rotary body. The engaging member differs from the breaking member in that it selectively disengages at least one of the above rotary bodies without breaking itself in order to operatively disconnect the other one of the above rotary bodies.

In alternative embodiments to the preferred embodiments, the power transmission cutting means or the power transmitting pin 17G is omitted.

In alternative embodiments to the preferred embodiments, the damping member 17N is made of another material such as elastomer instead of rubber.

In alternative embodiments to the preferred embodiments, the damping member 17N is omitted.

In alternative embodiments to the preferred embodiments, a one-way clutch mechanism does not include the wedge function as mentioned above. For example, as far as power is transmitted from the pulley 17 or the electric motor 77 to the rotary shaft 16 while the power transmission is being blocked from the rotary shaft 16 to the pulley 17 or the electric motor 77, any one-way clutch mechanisms are applicable.

In alternative embodiments to the preferred embodiments, the bearing mechanism 70 includes a plurality of in-line balls that is aligned in the axial direction of the rotary shaft 16.

In alternative embodiments to the preferred embodiments, a single pressure monitoring point is located in a refrigerant circuit, instead of two monitoring points. The control valve 43 adjusts a position of the valve body portion 52 in response to detected pressure at the single pressure monitoring point. Incidentally, the control valve 43 is designed to vary a position of the valve body portion 52 only by an external command.

In alternative embodiments to the preferred embodiments, the control valve 43 is designed to mechanically vary a position of the valve body portion 52, instead of the control valve 43 that is designed to externally vary a normal position of the valve body portion 52.

In alternative embodiments to the preferred embodiments, the power transmitting mechanism PT is employed to a double-headed piston type compressor that includes a double-headed piston for exerting pressure on fluid in a cylinder bore formed on both sides of a crank chamber.

In alternative embodiments to the preferred embodiments, instead of the compressor main body C having the swash plate or the cam plate 20 that rotates integrally with the rotary shaft 16, the compressor main body C has a cam plate that is supported by a rotary shaft, and the cam plate oscillates relative to the rotary shaft. For example, the compressor main body C is a wobble type compressor.

In alternative embodiments to the preferred embodiments, the compressor main body C is not configured to vary its displacement to substantially zero.

In alternative embodiments to the preferred embodiments, the compressor main body C is a fixed displacement compressor. Due to the above structure, the piston 25 reciprocates over a constant stroke distance.

In alternative embodiments to the preferred embodiments, the compressor main body C is a rotary type compressor such as a scroll type compressor. In other alternative embodiments to the preferred embodiments, the rotary body is replaced by a sprocket or a gear.

In alternative embodiments to the preferred embodiments, a rotary machine is not a compressor but a power steering pump. The rotary machine for a vehicle includes an electric motor, and a rotary shaft of the rotary machine is selectively driven by the electric motor and an external drive source.

Therefore, the present examples and embodiments are to be considered as illustrative and not restrictive, and the invention is not to be limited to the details given herein but may be modified within the scope of the appended claims.

A one-way clutch assembly has a first ring, a second ring, a third ring, a first one-way clutch mechanism and a second one-way clutch mechanism. The first, second and third rings have a substantially circular shape. The second and third rings are coaxially located with respect to the first ring. The first one-way clutch mechanism is located between the first ring and the second ring for selectively transmitting first power therebetween. The second one-way clutch mechanism is located between the first ring and the third ring for transmitting second power therebetween.

**Claims**

1. A one-way clutch assembly comprising:

    a first ring having a substantially cylindrical shape;
    a second ring having a substantially cylindrical shape, the second ring being coaxially located with respect to the first ring;
    a third ring having a substantially cylindrical shape, the third ring being coaxially located with respect to the first ring;
    a first one-way clutch mechanism located between the first ring and the second ring for selectively transmitting first power therebetween; and
    a second one-way clutch mechanism located between the first ring and the third ring for selectively transmitting second power therebetween.

2. The one-way clutch assembly according to claim 1, wherein the first one-way clutch mechanism and the second one-way clutch mechanism respectively alternate the first and second power transmission.

3. The one-way clutch assembly according to claim 1, wherein the first ring is located between the second ring and the third ring.

4. The one-way clutch assembly according to claim 3, wherein the first, second and third rings have a different size in diameter and are overlapped with each other.

5. The one-way clutch assembly according to claim 3, wherein the first, second and third rings have substantially the same size in diameter and are adjacent with each other.

6. The one-way clutch assembly according to claim 1, wherein the first ring is smaller in diameter than the second and third rings and is substantially located inside the second and third rings.

7. The one-way clutch assembly according to claim 1, wherein the first ring is larger in diameter than the second and third rings, the second and third rings being substantially located inside the first ring.

8. The one-way clutch assembly according to claim 1, further comprising:

    a first bearing mechanism located between the first ring and the second ring.

9. The one-way clutch assembly according to claim 8, further comprising:

    a second bearing mechanism located between the first ring and the third ring.

10. A one-way power transmission clutch unit for a rotary machine that has a rotary shaft and first and second drive sources for driving the rotary machine, the one-way clutch unit comprising:

    a first power transmission unit coupled to the rotary shaft;
    a second power transmission unit coupled to the first drive source;
    a third power transmission unit coupled to the second drive source;
    a first one-way clutch mechanism located between the first and second power transmission units for selectively transmitting first power therebetween; and
    a second one-way clutch mechanism located between the first and third power transmission units for selectively transmitting second power therebetween.

11. The one-way power transmission clutch unit according to claim 10, wherein the first, second and third power transmission units respectively include first, second and third rings that are coaxially aligned with respect to the rotary shaft, and the first one-way clutch mechanism being located between the first and second rings, the second one-way clutch mechanism being located between the first and third rings.

12. The one-way power transmission clutch unit according to claim 11, wherein the first, second and third rings are aligned in a radial direction of the rotary shaft.

13. The one-way power transmission clutch unit according to claim 10, wherein the first one-way clutch mechanism permits the first power transmission and the second one-way clutch mechanism blocks the second power transmission while the first drive source operates.

14. The one-way power transmission clutch unit according to claim 10, wherein the second one-way clutch mechanism permits the second power transmission and the first one-way clutch mechanism blocks the first power transmission while the second drive source operates.

15. The one-way power transmission clutch unit according to claim 10, wherein the rotary machine includes a compressor.

16. A rotary machine having an external drive source for driving the rotary machine, the rotary machine comprising:

    a housing;
    a pressure exerting mechanism located in the housing;
    a rotary shaft rotatably supported by the housing to drive the mechanism;
    a rotary body coupled to the external drive source;
    an electric motor is connected to the housing, the electric motor including a rotor and a stator;
    a first power transmission unit connected to the rotary shaft;
    a second power transmission unit connected to the rotary body;
    a third power transmission unit connected to the electric motor;
    a first one-way clutch mechanism located between the first power transmission unit and the second power transmission unit for selectively transmitting first power therebetween; and
    a second one-way clutch mechanism located between the first power transmission unit and the third power transmission unit for selectively transmitting second power therebetween.

17. The rotary machine according to claim 16, wherein the first one-way clutch mechanism permits the first power transmission and the second one-way clutch mechanism blocks the second power transmission while the external drive source operates.

18. The rotary machine according to claim 16, wherein the second one-way clutch mechanism permits the second power transmission and the first one-way clutch mechanism blocks the first power transmission while the electric motor operates.

19. The rotary machine according to claim 16, wherein the first, second and third power transmission units respectively include first, second and third rings that are aligned coaxially with respect to the rotary shaft, the first one-way clutch mechanism being located between the first and second rings, the second one-way clutch mechanism being located between the first and third rings.

20. The rotary machine according to claim 19, wherein the first ring is located between the second ring and the third ring, the first, second and third rings having a different size in diameter, the first, second and third rings being aligned in a radial direction of the rotary shaft.

21. The rotary machine according to claim 16, wherein the rotary body includes a power transmitting portion on its circumference, the power transmitting portion being coupled to the external drive source, at least one of the electric motor and the first and second one-way clutch mechanisms being at least partially located inside the power transmitting portion.

22. The rotary machine according to claim 16, wherein the rotor is substantially located inside the stator, the second one-way clutch mechanism being located between the rotor and the rotary shaft.

23. The rotary machine according to claim 16, wherein the rotor is substantially located outside the stator in a radial direction of the rotary shaft.

24. The rotary machine according to claim 16, wherein at least one of the first and second power transmission units and the rotary body includes a power transmission cutting means for cutting the first power transmission between the external drive source and the rotary shaft when torque transmission exceeds a predetermined value therebetween.

25. The rotary machine according to claim 24, wherein the power transmission cutting means is made of a material that is selected from the group consisting of sintered metal, low-carbon steel, resin and ceramics.

26. The rotary machine according to claim 25, wherein the fatigue limit ratio of the material is approximately 0.5.

**27.** The rotary machine according to claim 16, wherein at least one of the first and second power transmission units and the rotary body includes a damping member.

**28.** The rotary machine according to claim 27, wherein the damping member is made of a material that is selected from the group consisting of rubber and elastomer.

**29.** The rotary machine according to claim 16, wherein the pressure exerting mechanism includes a compressor for exerting pressure on fluid.

**30.** The rotary machine according to claim 29, wherein the compressor further includes a variable displacement unit for varying its displacement per unit rotation of the rotary shaft, and the displacement of the compressor is controllably decreased to approximately zero.

# FIG. 1

# FIG. 2

EP 1 316 740 A2

# FIG. 3

# FIG. 4

# FIG. 5A

# FIG. 5B

# FIG. 6A

# FIG. 6B

# FIG. 7

# FIG. 8A

66A

III

67A

III

69A    68A

# FIG. 8B

69A    68A    66A

702A    701A

712A    711A

67A

# FIG. 9A

66B

IV

69B

IV

67B

68B

# FIG. 9B

702B 712B 711B 701B

66B

69B

68B

67B

# FIG. 10A

66C

V
←
68C
←
V
69C  67C

# FIG. 10B

702C  711C
66C
712C  701C
68C
69C  67C